# EUROPÄISCHE PATENTANMELDUNG

(11) **EP 2 067 398 A1**
(43) Veröffentlichungstag der Anmeldung: **10.06.2009**
(21) Anmeldenummer: 08020738.4
(22) Anmeldetag: 28.11.2008
(51) Int. Cl.: A01D 69/02

(54) **Hybrid-Rasenmäher**

(30) Priorität: 29.11.2007 DE 102007057426
(71) Anmelder: Wolf-Garten GmbH & Co. KG, 57518 Betzdorf (DE)
(72) Erfinder: Izard, Ramon Valls, 08193 Bella Terra (Barcelona) (ES); Pfau, Ulrich, 57567 Daaden (DE)
(74) Vertreter: Koch, Günther

(57) **Zusammenfassung**

Die Erfindung bezieht sich auf einen Hybrid-Rasenmäher oder ein vergleichbares Gerät, das mit Wechselspannung und einer geräteeigenen aufladbaren Batterie (12) betreibbar ist. Der Antriebsmotor ist ein Drehfeldmotor (5), der über einen Frequenzwandler (4) mit Leistungsdioden über einen Transistortreiber (6) und einen entsprechend programmierten Mikrokontroller (7) für den Hochlauf gesteuert wird. Das Abschalten des Motors (5) wird über den Mikrokontroller (7) festgestellt, der augenblicklich den Transistortreiber (6) veranlasst, den Drehfeldmotor (5) im Sinne einer dynamischen Abbremsung umzusteuern, wobei Transistortreiber (6) und Mikrokontroller (7) während des Abschaltvorganges kurzzeitig durch eine Hilfsspannungsquelle (3,8,9) gespeist werden, die vorzugsweise in Form von Kondensatorbatterien vorhanden ist, welche während des Betriebes aufgeladen wurden.

## Beschreibung

Die Elektromotoren zum Antrieb der Schneidwerkzeuge von Gartengeräten, beispielsweise Rasenmähern, werden entweder durch Anschluss an das zur Verfügung stehende Wechselstromnetz oder über eine im Gerät angeordnete aufladbare Batterie gespeist. Die netzbetriebenen Geräte haben den Vorteil, dass sie dauerhaft mit einer konstanten Leistung arbeiten und ein sicherer Antrieb der Werkzeuge gewährleistet ist. Nachteilig ist das Nachführen des Zuführungskabels, das bei unsachgemäßer Bedienung leicht beschädigt werden kann.

Batterie-betriebene Geräte haben den Vorteil, dass sie sicher und ohne störende Zuführungskabel betrieben werden können. Nachteilig an diesen Geräten ist die nur beschränkt zur Verfügung stehende Energie und das erhebliche Gewicht, das im Betrieb mit dem Gerät mitgeführt werden muss. Die moderne Entwicklung auf dem Gebiet wiederaufladbarer Batterien hat zwar zu leistungsstarken, gewichtsmäßig relativ leichten Batterietypen geführt, die zunehmend zur Energieversorgung von Haus- und Gartengeräten benutzt werden können, aber auch diese haben natürlich nur eine begrenzte Kapazität. Für den Einsatz bei Gartengeräten sind insbesondere die in jüngster Zeit entwickelten Lithium-lonen-Akkus geeignet, die eine hohe Energiedichte bei relativ geringem Gewicht aufweisen. Auch hierbei ist jedoch nach einer bestimmten Arbeitszeit ein Wiederaufladen der Batterie erforderlich, und es wird oft als nachteilig empfunden, die Arbeit während der relativ lang dauernden Aufladezeit unterbrechen zu müssen. Es besteht daher ein Bedürfnis nach einer Möglichkeit, das Gerät auch nach Entladung des Akkus ohne Unterbrechung weiter betreiben zu können.

Die Lösung dieses Problems wird nachstehend in Verbindung mit einem Elektrorasenmäher beschrieben, jedoch ist die Erfindung nicht hierauf beschränkt, und sie kann in gleicher Weise mit Vorteil in Verbindung mit anderen Haus- oder Gartengeräten Anwendung finden, beispielsweise bei Elektrovertikutierern, Elektroheckenscheren, Laubsaugern, Kehrmaschinen und dergleichen.

Naheliegend zur Lösung des genannten Problems ist die Möglichkeit einer wechselseitigen Erregung des Elektromotors durch Batteriebetrieb und/oder Netzbetrieb. Diese Möglichkeiten des Betriebes sind bei Kleingeräten seit langem üblich. Als Beispiele hierfür sind Rasierapparate, Haarschneidemaschinen oder dergleichen zu nennen. Eine Übertragung dieses seit langem bekannten wechselseitigen Betriebes auf Geräte, die eine höhere Leistung erfordern, ist nicht ohne Weiteres möglich, weil hierbei im Einzelnen weitere Probleme zu berücksichtigen sind. Eine naheliegende Lösung eines derartigen "Hybrid-Antriebes" für Haus- oder Gartengeräte könnte darin bestehen, einen Universalkollektormotor als Antrieb zu benutzen, der wahlweise mit Wechselspannung aus dem Netz oder Gleichspannung aus einer Batterie benutzt werden kann. Eine derartige Ausbildung wäre jedoch zum Antrieb von Rasenmähern und ähnlichen Geräten ungünstig, weil im Fehlerfall das Gerät ohne Betätigung des Einschalters anlaufen könnte. Ferner bestehen gesetzliche Bestimmungen, gemäß denen nach Abschaltung des Stromes die Messer innerhalb weniger Sekunden aus Sicherheitsgründen stillgesetzt sein müssen.

Aufgabe der vorliegenden Erfindung ist es, einen Hybrid-Rasenmäher der beschriebenen Bauart oder ein hiermit vergleichbares Gerät zu schaffen, das bei relativ einfachem Aufbau die vorstehend erwähnten Forderungen mit Sicherheit dauerhaft erfüllt.

Gelöst wird die gestellte Aufgabe durch die im Patentanspruch 1 angegebenen Merkmale.

Der Mikrokontroller ist dabei derart programmiert, dass beim Einschalten der Motor auf die gewünschte Drehzahl hochläuft, wobei zunächst festgestellt wird, ob die Speisung über das Netz oder über die mitgeführte Batterie erfolgt. Ohne Anschaltung des Mikrokontrollers wird ein mit Gefahr verknüpftes unabsichtliches Hochlaufen mit Sicherheit verhindert, selbst wenn am Inverter eine Gleichspannung anliegt, weil der Drehfeldmotor auch dann nicht in der Lage ist hochzulaufen. Wird vom Mikrokontroller festgestellt, dass ein Netzanschluss vorhanden ist, erfolgt eine Einspeisung über einen Gleichrichter, wobei gleichzeitig eine Aufladung der Batterie erfolgen kann. Ist kein Wechselstromanschluss vorhanden, wird der Batterieanschluss geschaltet, und der Motor läuft in der gewünschten Weise hoch. Eine Abschaltung wird vom Mikrokontroller augenblicklich festgestellt, und es erfolgt eine Steuerung des Transistortreibers in der Weise, dass im Drehfeldmotor ein Gegenfeld oder eine Rampenspannung erzeugt wird, wodurch eine augenblickliche Stillsetzung des Motors und somit der Werkzeuge bewirkt wird. Die für die Speisung des Transistortreibers und des Mikrokontrollers notwendige Gleichspannung wird ebenso wie die Spannungsversorgung des Inverters durch Hilfsgleichspannungsquellen, vorzugsweise durch Kondensatorbatterien, bewirkt. Diese Hilfsspannung könnte an sich auch durch die eingebaute Batterie oder eine Hilfsbatterie zur Verfügung werden, jedoch erweist sich die Speisung über die Kondensatorbatterien insofern als vorteilhaft, als diese Spannung unabhängig vom Ladezustand der Batterie bei der Abschaltung durch die im Betrieb erfolgte Aufladung der Kondensatoren immer für die erforderliche Zeitdauer der Stillsetzung zur Verfügung steht. Die notwendige Höhe der Speisespannung wird auch bei abfallender Ladung der Kondensatoren durch Anordnung von Spannungsreglern gewährleistet. Um zu gewährleisten, dass beim Abschalten die notwendige Hilfsspannung zur Verfügung steht, wird beim Einschalten die Hilfsspannungsquelle gemäß Anspruch 3 bis 5 überprüft und der Anlauf des Motors verhindert, wenn eine Störung festgestellt wurde.

Weitere Ausgestaltungen der Erfindung ergeben sich aus den Unteransprüchen.

Nachstehend wird ein Ausführungsbeispiel der Erfindung anhand einer Schaltung beschrieben, die geeignet ist zur Speisung des Antriebsmotors eines Elektrorasenmähers, die jedoch auch eingesetzt werden kann für andere vergleichbare Haus- oder Gartengeräte, bei denen ähnliche Betriebsbedingungen vorliegen.

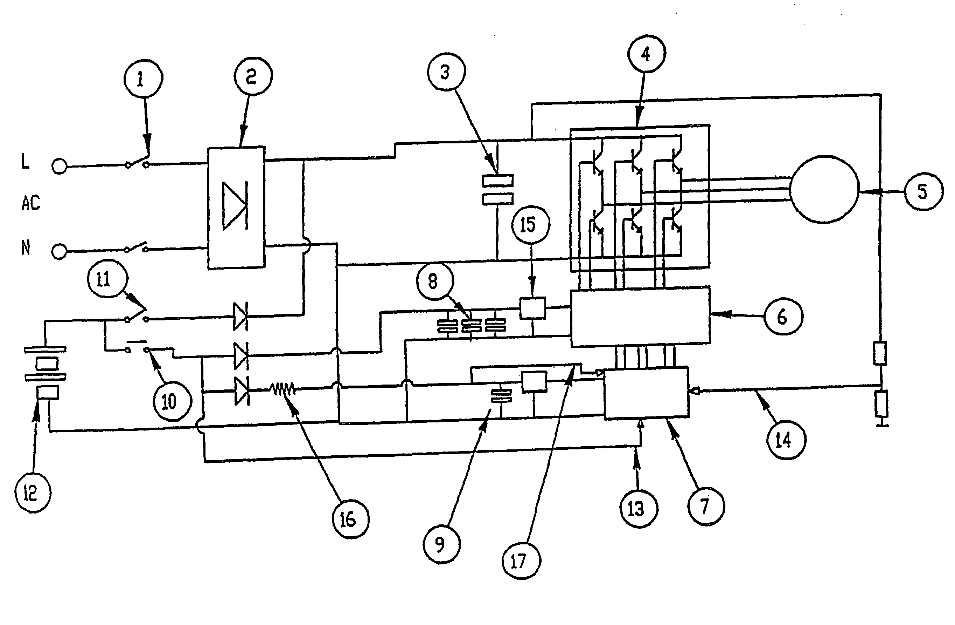

Die Zeichnung zeigt einen Wechselspannungsanschluss L-N, der über ein Netzkabel mit einem 50 Hz-Netzanschluss verbunden werden kann. Über ein die Einschaltkontakte betätigendes Einschaltrelais 1 werden die Anschlüsse L-N mit einem Gleichrichter 2 verbunden, dessen Gleichspannungsausgang über eine Kondensatorbatterie 3 an den Gleichspannungseingang eines Frequenzwandlers 4 angeschlossen ist, der Leistungstransistoren aufweist. Der Ausgang dieser Wandlerschaltung ist mit den Erregerwicklungen eines Drehfeldmotors, insbesondere eines Dreiphasen-Asynchronmotors 5, verbunden. Der Frequenzwandler 4 wird über einen Transistortreiber 6 gesteuert, der seinerseits an einen Mikrokontroller 7 angeschlossen ist und die Basissteuerelektroden der Leistungstransistoren in entsprechender Weise ansteuert.

Parallel zu dem Ausgang des Gleichrichters 2 ist der Ausgang einer aufladbaren Batterie 12 über ein Einschaltrelais 11 verbunden. Der Transistortreiber 6 und der Mikrokontroller 7 sind über einen Ein/Aus-Schalter 10 mit dem Ausgang der Batterie 12 bzw. mit dem Ausgang des Gleichrichters 2 verbunden. Der Eingang erfolgt über ein Diodenfeld.

An den Eingang des Transistortreibers 6 ist eine Kondensatorbatterie 8 angeschlossen, wobei ein Spannungsregler 15 auch bei Abschaltung der Speisespannung kurzzeitig die erforderliche Höhe der Spannung aufrecht erhält.

In gleicher Weise ist an den Eingang des Mikrokontrollers 7 eine Kondensatorbatterie 9 über einen Spannungsregler angeschlossen. Die Kondensatoren besitzen eine ausreichende Kapazität, um die Spannung einige Sekunden so lange aufrecht zu erhalten, bis die Werkzeuge mit Sicherheit stillgesetzt sind. Die von den Kondensatoren gelieferte Spannung wird durch lineare Spannungsregler 15 geregelt. Die Kondensatorbatterien 8 und 9 werden im Betrieb ständig von der Batterie oder dem Gleichrichter 2 über den Ein/Aus-Schalter 10 und die Reihendioden gespeist.

Der Hauptkondensator 3 wird durch den Gleichrichter 2 (oder die Batterie 12) gespeist, wobei die Einspeisung über die Relaiskontakte 1 und 11 erfolgt, je nachdem, ob ein Netzanschluss zur Verfügung steht oder nicht.

### Das Gerät arbeitet wie folgt:

Der Ein/Aus-Schalter 10 ist anfänglich offen. Unter diesen Umständen wird der Mikrokontroller 7 nicht gespeist, und es können keine Pulsbreiten-modulierten Impulse erzeugt werden. Außerdem wird der Transistortreiber 6 nicht gespeist, so dass keine Spannung an die Steuerelektroden der Transistoren angelegt werden kann. Im typischen Fall ist der Transistortreiber eine integrierte Schaltung, die einen Unterspannungskomparator besitzt, der alle Transistoren unter dieser Bedingung abschaltet. Der Hauptkondensator 3 könnte noch eine gewisse Ladung aufweisen, und es könnte dadurch eine gewisse Energie an den Motor angelegt werden, falls eine Fehlfunktion der Transistoren auftritt. Da jedoch der Drehfeld-Induktionsmotor nicht auf Gleichspannungen anspricht, sondern nur auf Wechselspannungen, kann der Motor 5 nicht anlaufen, solange der Schalter 10 in der Abschaltstellung befindlich ist.

Wenn der Schalter 10 angeschaltet wird, dann wird der Mikrokontroller 7 gespeist, und er ist so programmiert, dass die folgenden Schritte durchgeführt werden:
1. Es wird durch nicht dargestellte Sensoren überprüft, ob eine Wechselspannung an den Eingangsklemmen L-N zur Verfügung steht.
2a. Falls die Wechselspannung zur Verfügung steht, erfolgt über das Relais 1 eine Einschaltung, und der Frequenzwandler 4 wird über den Gleichrichter 2 an Gleichspannung gelegt.
2b Falls an den Eingangsklemmen L-N keine Wechselspannung zur Verfügung steht, schließt der Mikrokontroller über das Relais 11 den Schalter, der die Batterie 12 parallel zum Ausgang des Gleichrichters 2 schaltet, wodurch der Frequenzwandler 4 an Gleichspannung gelegt wird.
3. Es werden entsprechende Impulsbreiten-Modulationssignale erzeugt, um den Motor 5 auf seine Nenndrehzahl hochlaufen zu lassen, indem Frequenz und Spannung des Modulationssignals entsprechend erhöht werden. Die Breite der Impulse wird kompensiert in Abhängigkeit von der Spannung, die am Hauptkondensator 3 zur Verfügung steht, damit jeweils der gleiche Strom und die gleiche Frequenz dem Motor 5 sowohl im Wechselstrombetrieb als auch im Gleichstrombetrieb zugeführt werden, und zwar erfolgt eine Erhöhung von der minimalen auf die maximale Spannung, d.h. von z.B. 80 Volt Gleichstrom auf 325 Volt Gleichstrom.
   Die Mittel zur Messung der Spannung am Kondensator 3 können aus einem einfachen Widerstandsspannungsteiler bestehen, der an einen Analogeingang 14 des Mikrokontrollers 7 angeschlossen ist.
   Der Mikrokontroller 7 wird ständig über den eingelegten Schalter 10 mit einem Signal 13 versorgt, und er stellt sofort fest, wenn der Schalter 10 geöffnet wird (um den Motor stillzusetzen).
4. Wenn der Schalter 10 geöffnet wird, dann wird der Mikrokontroller weiter durch die Ladung der Kondensatorbatterie 9 gespeist, und der Transistortreiber wird durch die Kondensatorbatterie 8 gespeist, und der Mikrocontroller startet eine Frequenzrampenschaltung nach unten, der ein Gleichstromspannungsimpuls folgt, welcher den Motor veranlasst, innerhalb von Sekunden durch dynamische Bremsung stillgesetzt zu werden. Die verbleibende Ladung wird in den nächsten Sekunden abgebaut, und das System verbleibt eigensicher gegen jede Fehlfunktion seiner Komponenten.

Damit ein sicheres dynamisches Abbremsen gewährleistet ist, muss sichergestellt werden, dass beim Abschalten die Hilfsspannung zur Verfügung steht. Deshalb erfolgt beim Einschalten eine Überprüfung der dem Mikrokontroller 7 zugeordneten Kondensatorbatterie 9. Die Aufladung erfolgt über einen Widerstand 16, und das Signal wird dem Analog- oder Logikeingang 17 des Mikrokontrollers zugeführt.

### Bezugszeichenliste

- 1: Einschaltrelais
- 2: Gleichrichter
- 3: Kondensatorbatterie
- 4: Frequenzwandler
- 5: Drehfeldmotor
- 6: Transistortreiber
- 7: Mikrokontroller
- 8: Kondensatorbatterie
- 9: Kondensatorbatterie
- 10: Ein/Aus-Schalter
- 11: Einschaltrelais
- 12: aufladbare Batterie
- 13: Signal
- 14: Analogeingang
- 15: Spannungsregler
- 16: Widerstand
- 17: Eingang

## Patentansprüche

1. Hybrid-Rasenmäher mit einem die Schneidwerkzeuge antreibenden Elektromotor (5), der wahlweise über das Wechselstromnetz (L-N) oder über eine geräteeigene über das Wechselstromnetz aufladbare Batterie (12) gespeist wird, bei welchem:
- der Elektromotor ein Drehfeldmotor (5) ist, dessen Erregerwicklungen über einen Frequenzwandler (4) gespeist werden;
- der Frequenzwandler (4) eine Gleichstrom-Brückenschaltung aufweist, deren Leistungstransistoren über einen Transistortreiber (6) gesteuert werden;
- ein Mikrokontroller (7) Pulsbreiten-modulierte Signale für den Transistortreiber erzeugt, um drei bezüglich Wechselfrequenz und Spannung gesteuerte Motorerregerströme zunehmender Größe zum Hochlauf des Motors (5) zu erzeugen;
- Hilfs-Gleichstrom-Spannungsquellen (3, 8, 9) vorgesehen sind, die bei Abschaltung des Motors (5) den Frequenzwandler (4) und den Transistortreiber (8) sowie den Mikrokontroller (7) während einer begrenzten Nachlaufzeit im Sinne einer dynamischen Stillsetzung des Motors (5) speisen.

2. Hybrid-Rasenmäher nach Anspruch 1,
**dadurch gekennzeichnet, dass** die Hilfs-Spannungsquellen von Kondensatorbatterien (3, 8, 9) gebildet werden, die sowohl im Wechselstrombetrieb als auch im Batteriebetrieb aufgeladen werden.

3. Hybrid-Rasenmäher nach den Ansprüchen 1 und 2,
**dadurch gekennzeichnet, dass** der Mikrokontroller (7) die Hilfs-Gleichstrom-Spannungsquelle (9) überprüft und bei Feststellung eines Fehlers den Anlauf des Motors (5) verhindert.

4. Hybrid-Rasenmäher nach den Ansprüchen 2 und 3,
**dadurch gekennzeichnet, dass** die Aufladezeit des Hilfsspannungskondensators (9) gemessen wird.

5. Hybrid-Rasenmäher nach Anspruch 4,
**dadurch gekennzeichnet, dass** der Hilfsspannungskondensator über einen Widerstand (16) gespeist wird und die Spannung dem Logikeingang (17) des Mikrokontrollers angelegt wird.

6. Hybrid-Rasenmäher nach einem der Ansprüche 1 bis 5,
**dadurch gekennzeichnet, dass** der Mikrokontroller eine Abschaltung (10) feststellt und den Frequenzwandler auf dynamische Bremsung des Motors (5) umschaltet.

7. Hybrid-Rasenmäher nach einem der Ansprüche 1 bis 6, bei welchem Sensoren vorgesehen sind, die das Anlegen einer Wechselnetzspannung an den Eingängen (L-N) feststellen und bei Vorhandensein der Netzspannung den Gleichrichter (2) über ein Relais (1) anschalten und bei Nichtvorhandensein der Wechselspannung über ein Relais (11) eine Anschaltung der Batterie (12) bewirken.

8. Hybrid-Rasenmäher nach einem der Ansprüche 1 bis 7, bei dem der Frequenzwandler (4), die dynamische Abbremsung des Induktionsmotors bewirkt, während Mikrokontroller und Transistortreiber allein durch die Ladung gespeist werden, die in den Kondensatorgruppen (8, 9) vorhanden ist.

9. Hybrid-Rasenmäher nach Anspruch 8,
**dadurch gekennzeichnet, dass** die dem Transistortreiber (6) und dem Mikrokontroller (7) zugeführte Nennspannung bei abnehmender Kondensatorladung durch Spannungsregler (15) aufrecht erhalten bleibt.

10. Hybrid-Rasenmäher nach Anspruch 1,
**dadurch gekennzeichnet, dass** der Gleichrichter (2) bei eingeschalteter Wechselspannung (Relais 1) und eingeschalteter Batteriespannung (Relais 11) eine Aufladung der Batterie (12) bewirkt.
